(19) Europäisches Patentamt
European Patent Office
Office européen des brevets

(11) **EP 2 014 410 A1**

(12) **EUROPÄISCHE PATENTANMELDUNG**

(43) Veröffentlichungstag:
**14.01.2009   Patentblatt 2009/03**

(51) Int Cl.:
**B23Q 17/00** (2006.01)

(21) Anmeldenummer: 07019880.9

(22) Anmeldetag: **11.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **12.07.2007   DE 102007032416**

(71) Anmelder: **Aradex AG**
**73547 Lorch (DE)**

(72) Erfinder:
• **Speer, Rolf**
**73547 Lorch (DE)**
• **Vetter, Thomas**
**73547 Lorch (DE)**

(74) Vertreter: **Gleiss & Grosse**
**Patentanwälte Rechtsanwälte**
**Leitzstrasse 45**
**70469 Stuttgart (DE)**

(54) **Verfahren zur Betätigung einer Spannvorrichtung und Spannsystem zur Durchführung des Verfahrens**

(57)    Die Erfindung betrifft ein Verfahren welches zur Betätigung einer Spannvorrichtung (3) zum Spannen eines Werkzeugs oder Werkstücks dient. Die Spannvorrichtung umfasst einen elektrischen Antrieb (2), in welchem Einrichtungen zur Messung von Motorströmen und Motorpositionen zur Kontrolle von mit der Spannvorrichtung (3) durchgeführten Spannvorgängen integriert sind.

# Fig. 1

EP 2 014 410 A1

**Beschreibung**

Die Erfindung betrifft ein Verfahren zur Betätigung einer Spannvorrichtung sowie ein Spannsystem zur Durchführung des Verfahrens.

Spannsysteme mit Spannvorrichtungen werden in unterschiedlichen Ausbildungen eingesetzt um Werkzeuge, wie zum Beispiel Bohrer oder Fräser, zu spannen. Die Spannvorrichtungen, die dazu dienen, ein Werkzeug in einer Werkzeugaufnahme zu spannen, bestehen typischerweise aus einer Spannzange oder einem Spannsatz aus Spannelementen, die über den Umfang der Werkzeugaufnahme verteilt angeordnet sind. Weiterhin dienen Spannvorrichtungen der in Rede stehenden Art zum Spannen von Werkstücken.

Die Spannvorrichtungen werden üblicherweise über mechanische Stellelementen geöffnet oder geschlossen. Beispielsweise werden bei Spannvorrichtungen in Form von Spannzangen diese üblicherweise in einer axial beweglichen Zangenhalterung gelagert und können dann durch einen axial verschiebbaren kegelförmigen Spannstab betätigt, das heißt bewegt werden Die notwendigen Spannkräfte zum Spannen des Werkzeugs werden dabei von Federpaketen aufgebracht, die den kegelförmigen Spannstab gegen die Spannzangen drücken. Das Lösen des Werkzeugs aus der Spannvorrichtung erfolgt dann hydraulisch, indem die Spannzangen mittels einer Hydraulikeinheit gegen die Federkräfte der Federpakete zurückgeschoben werden.

In der DE 101 01 096 A1 wird ein Verfahren zur Betätigung einer Spannvorrichtung für Werkzeuge beschrieben, die an einer rotierend antreibbaren Spindel vorgesehen ist und eine Betätigungseinrichtung für die Betätigungsstange aufweist. Bei diesem Verfahren wird die über die Betätigungsstange ausgeübte, auf ein an der Spindel eingespanntes Werkzeug wirkende axiale Spannkraft geregelt, vorzugsweise auch während des Betriebs und des Umlaufs der Spindel, wobei die Größe der Spannkraft werkzeugbezogen eingestellt und geregelt wird.

Die Betätigungsstange wird mittels eines Elektromotors angetrieben. Die IstWerte für die Regelung generiert ein zwischen der Spindel und dem Werkzeug angeordneter Sensor, der die dort auftretenden Kräfte misst.

Der Erfindung liegt die Aufgabe zugrunde, ein Verfahren zur Betätigung einer Spannvorrichtung sowie ein Spannsystem so auszubilden, dass bei geringem konstruktivem Aufwand eine hohe Funktionalität bei der Durchführung von Spannvorrichtungen gegeben ist.

Zur Lösung dieser Aufgabe sind die Merkmale der Ansprüche 1 und 15 vorgesehen. Vorteilhafte Ausführungsformen und zweckmäßige Weiterbildungen der Erfindung sind in den Unteransprüchen beschrieben.

Das erfindungsgemäße Verfahren dient zur Betätigung einer Spannvorrichtung zum Spannen eines Werkzeugs oder Werkstücks. Das Werkzeug umfasst einen elektrischen Antrieb, in welchem Einrichtungen zur Messung von Motorströmen und Motorpositionen zur Kontrolle von mit der Spannvorrichtung durchgeführten Spannvorgängen integriert sind. Weiterhin ist ein Spannsystem zur Durchführung des Verfahrens vorgesehen.

Bei komplexen Werkstücken können insbesondere auch Mehrfachspannsysteme, das heißt mehrere Spannsysteme gemäß der vorliegenden Erfindung eingesetzt werden. Das erfindungsgemäße Spannsystem kann dabei generell zum Spannen feststehender Werkstücke oder sich bewegender, insbesondere rotierender Werkstücke eingesetzt werden. Die Spannvorrichtungen zum Spannen von Werkstücken können generell rotationssymmetrische Spannwerkzeuge aufweisen, deren Durchmesser durch kegelförmige Umsetzungen variiert werden können. Weiterhin können als Spannwerkzeuge auch Spannzangen oder dergleichen eingesetzt werden.

Ein wesentlicher Vorteil des erfindungsgemäßen Verfahrens beziehungsweise des erfindungsgemäßen Spannsystems besteht darin, dass die notwendigen Spannkräfte zum Spannen des Werkzeugs oder Werkstücks allein durch den elektrischen Antrieb aufgebracht werden können, so dass mechanische Systeme, wie Federpakte zum Schließen der Spannvorrichtung sowie Hydraulikeinrichtungen zum Öffnen der Spannvorrichtungen, entfallen können.

Um die notwendige Funktionssicherheit der Spannvorrichtung zu gewährleisten, ist es bei derartigen elektrischen Spannsystemen hilfreich, die Spannkräfte bei Durchführung der Spannvorgänge zu bestimmen. Bei dem erfindungsgemäßen Spannsystem wird dies auf konstruktiv einfache Weise dadurch gelöst, dass mittels innerhalb des elektrischen Antriebs integrierter Messeinrichtungen sowohl die Motorströme als auch die Motorpositionen bestimmt werden können.

Die gemessenen Motorströme liefern ein Maß für die auftretenden Spannkräfte. Durch die zusätzliche Messung der Motorpositionen wird eine ortsaufgelöste Spannkraftmessung ermöglicht, und zwar ohne Einsatz aufwändiger externer Sensoren, da die Messeinrichtungen im Antrieb selbst integriert sind.

Anhand dieser Messgrößen ist eine genaue und umfassende Kontrolle der mit der Spannvorrichtung durchgeführten Spannvorgänge möglich.

Generell können die Messungen während des Spannvorgangs selbst durchgeführt werden, so dass für die Messungen kein zusätzlicher Zeitbedarf besteht. Alternativ können die Messungen in einem von den Spannvorgang getrennten Messvorgang durchgeführt werden. Dabei wird die Spannvorrichtung bei dem Messvorgang langsamer bewegt als beim Spannvorgang, um so die Messgenauigkeit zu erhöhen. Besonders vorteilhaft besteht für den Bediener des Spannsystems eine Wahlmöglichkeit, ob er den Messvorgang in den Spannvorgang integrieren möchte oder nicht.

Gemäß einem ersten Aspekt der Erfindung werden die gemessenen Motorströme und Motorpositionen zur Regelung des elektrischen Antriebs genutzt, um so die durchzuführenden Spannvorgänge aktiv zu kontrollieren. Wesentlich für diese Kontrolle ist, dass die gemessen Motorströme ein Maß für die aktuellen Spannkräfte sind, deren Kenntnis für ein Durchführen kontrollierter Schließund Öffnungsbewegungen der Spannvorrichtungen entscheidend ist. Die Berechnung der Spannkraft erfolgt anhand der gemessenen Motorströme anhand eines physikalischen Modells, in welches die relevanten physikalischen Einflussgrößen wie Reibung, Elastizitäten und kinematische Verhältnisse eingehen. Die zusätzliche Messung der Motorpositionen gibt weiterhin ein Maß für die aktuelle Lage der Spannvorrichtung, so dass zur Regelung des elektrischen Antriebs eine ortsaufgelöste Information über die aktuellen Spannkräfte vorliegt.

In einer besonders vorteilhaften Ausführungsform der Erfindung erfolgt die Regelung des elektrischen Antriebs derart, dass bei Anfahren der Spannvorrichtung an das Werkzeug, und entsprechend bei Wegfahren der Spannvorrichtung vom Werkzeug, eine Positionsregelung des Antriebs, durchgeführt wird. Vorteilhaft aber nicht zwingend wird bei einem bestimmten Punkt des Spannvorgangs eine Umschaltung auf eine Kraftregelung oder Momentenregelung, das heißt eine Regelung des elektrischen Antriebs in Abhängigkeit der gemessenen Motorströme, durchgeführt. Dabei erfolgt eine fliegende Umschaltung zwischen Positions- und Kraftregelung. Diese Regelung ist an den zeitlichen Verlauf des Spannvorgangs angepasst und führt somit zu einer Optimierung der durchzuführenden Spannvorgänge. Entsprechendes gilt bei Spannen von Werkstücken.

Gemäß einem zweiten Aspekt der Erfindung werden anhand der gemessenen Motorströme und Motorpositionen Kenngrößen abgeleitet, anhand derer Aussagen über die Qualität der durchgeführten Spannvorgänge möglich sind. Dies ermöglicht eine Prozesskontrolle derart, dass auftretende Fehler beim Spannvorgang, insbesondere auch vorhandene Materialfehler, aufgedeckt werden können.

Eine erste derartige Kenngröße stellt der effektive Spannschaftdurchmesser des Werkzeugs dar, der durch die Ermittlung des örtlichen Verlaufs, insbesondere des Anstiegs der Spannkraft in Abhängigkeit von der Motorposition, ermittelt und kontrolliert werden kann. Durch den Vergleich des gemessenen Spannschaftdurchmessers mit einem Sollwert können beispielsweise Fehlklemmungen detektiert werden, das heißt es kann ermittelt werden, ob ein Werkzeug eingespannt ist und ob das richtige Werkzeug eingespannt wurde. Weiterhin kann dabei kontrolliert werden, ob das Werkzeug außerhalb von vorgegebenen Toleranzen liegt. Besonders vorteilhaft wird durch Messung des örtlichen Verlaufs des Anstiegs der Spannkraft ermittelt, ob der Spannschaft Defekte oder Verunreinigungen aufweist. Entsprechendes gilt bei Spannen von Werkstücken.

Weiterhin können durch Messung von Gleitund Haftreibungskräften durch Ermitteln der Motorströme bei Verfahren der Spannvorrichtungen zusätzliche Kenngrößen abgeleitet werden. Die Messung von Gleittreibungskräften liefert dabei ein Maß für die innerhalb des Spannsystems vorhandene Schmiermittelmenge oder für vorhandene Beschichtungen, deren Zustand man damit ermitteln kann. Demgegenüber liefert die Messung von Haftreibungskräften ein Maß für die Selbsthemmung des mechanischen Spannsystems, das heißt der Mechanik der Spannvorrichtung.

Die Erfindung wird im Nachstehenden anhand der Zeichnungen erläutert. Es zeigen:

Figur 1: Blockschaltbild eines ersten Spannsystems mit einem elektrischen Antrieb in Form eines Linearantriebs.

Figur 2: Blockschaltbild eines zweiten Spannsystems mit einem elektrischen Antrieb in Form eines rotativen Antriebs mit einer Übersetzung.

Figur 3: Zeitabhängiger Verlauf der bei Durchführung eines Spannvorgangs mittels eines Spannsystems gemäß Figur 1 oder Figur 2 auftretenden Kräfte.

Figur 4: Bestimmung des Spannschaftdurchmessers aus dem positionsabhängigen Verlauf der Spannkräfte für zwei unterschiedliche Werkzeuge.

Figur 5: Bestimmung von Defekten oder Verunreinigungen eines Spannschafts aus dem positionsabhängigen Verlauf der Spannkraft.

Figur 6: Bestimmung von Gleit- und Haftreibungskräften aus dem positionsabhängigen Verlauf der Spannkraft.

Figur 7 a - c: Modelldarstellung eines Spannsystems in unterschiedlichen Phasen eines Spannvorgangs.

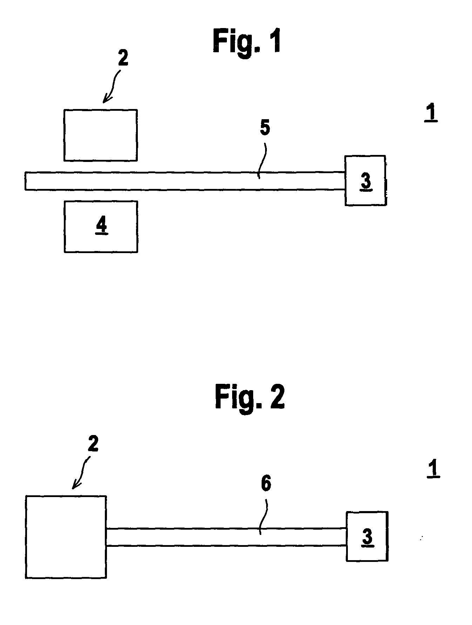

Die Figuren 1 und 2 zeigen schematisch jeweils ein Spannsystem 1 zum Spannen eines Werkzeugs wie beispielsweise eines Bohrers oder eines Fräsers. Obwohl in den Figuren auf ein Spannsystem für Werkzeuge Bezug genommen wird, ist das Spannsystem generell auch zum Spannen von Werkstücken geeignet. In beiden Ausführungsbeispielen ist ein elektrischer Antrieb 2 zur Betätigung einer Spannvorrichtung 3 vorgesehen. Die Spannvorrichtung 3 ist in bekannter Weise in Form einer Spannzange oder einem Spannsatz mit mehreren Spannelementen ausgebildet, welche in einer Aufnahme einer Werkzeughalterung angeordnet sind.

Der elektrische Antrieb 2 gemäß Figur 1 ist als Linearantrieb ausgebildet. Dieser weist bekannterweise eine stationäre Anordnung von Spulen 4 sowie eine stabförmige, lineare Anordnung von Magneten 5 auf, die relativ zu den Spulen 4 bewegt werden. Mit der Linearbewegung der Magnete 5 wird die Spannvorrichtung 3 betätigt, das heißt mittels des elektrischen Antriebs 2 werden Schließ- und Öffnungsbewegungen der Spannvorrichtung 3 bewirkt. Alternativ kann auch ein Linearantrieb eingesetzt werden, bei welchem die Spulen 4 bewegt werden und die Magnete 5 stationär sind.

Der elektrische Antrieb 2 gemäß Figur 1 ist als rotativer Antrieb 2 mit einer Übersetzung in Form einer Gewindespindel 6 ausgebildet. In diesem Fall wirkt der elektrische Antrieb 2 über die Gewindespindel 6 auf die Spannvorrichtung 3.

In beiden Ausführungsformen sind innerhalb des elektrischen Antriebs 2 Messeinrichtungen in Form von Gebern oder Sensoren vorgesehen, mittels derer die aktuellen Motorpositionen und Motorströme gemessen werden können.

Diese werden in einer nicht dargestellten Auswerteeinheit ausgewertet. Dabei werden die ermittelten Motorströme als Maß für die Spannkräfte, die bei mit der Spannvorrichtung 3 durchgeführten Spannvorgängen auftreten, ausgewertet. Die gemessenen Motorpositionen liefern ein Maß für die aktuellen Positionen der Spannvorrichtung 3.

Der elektrische Antrieb 2 besteht generell aus einem Elektromotor und einem Umrichter, wobei vorteilhaft die Sensorik zur Messung der Motorpositionen am Motor angeordnet ist und die Sensorik zur Messung der Motorströme im Umrichter integriert ist. Die Auswerteeinheit ist im Umrichter oder in einer diesem zugeordneten Steuereinheit vorgesehen.

Um beispielsweise nach einem Stromausfall das Herausfallen eines Werkzeugs aus der Spannvorrichtung 3 zu verhindern, ist das mechanische Spannsystem gemäß Figur 2 selbsthemmend ausgebildet. Die Selbsthemmung ergibt sich aus einer hinreichend großen Haftreibung, die beim Anfahren des elektrischen Antriebs 2 überwunden werden muss. Diese Haftreibung ist so groß, dass ein Öffnen der Spannvorrichtung 3 ohne aktive Betätigung durch den elektrischen Antrieb 2 nicht möglich ist.

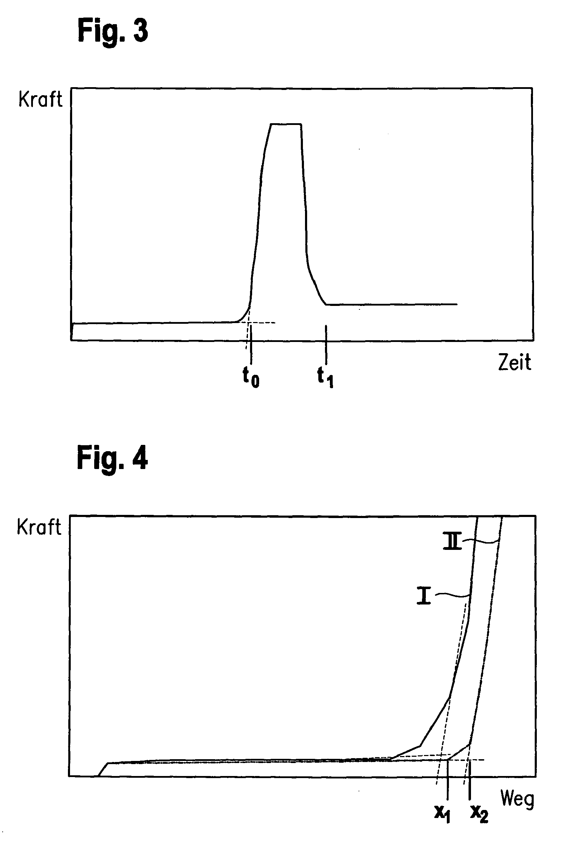

Die Funktion des Spannsystems 1 wird im Folgenden anhand der Figuren 3 bis 6 erläutert, wobei diese für beide Ausführungsvarianten des Spannsystems 1 gemäß Figur 1 und Figur 2 gültig sind.

Zur Durchführung der Spannvorgänge mittels des Spannsystems 1 wird der elektrische Antrieb 2 mit einer Regelung betrieben, wobei die hierfür vorgesehene Regeleinheit im Umrichter oder in der Steuereinheit integriert ist.

Der Regelungsprozess ist in Figur 3 veranschaulicht, welche den zeitlichen Verlauf der bei einem Spannvorgang auftretenden Kräfte zeigt.

Im Zeitintervall $0 \leq t \leq t_0$ erfolgt das Anfahren der Spannvorrichtung 3 an das zu spannende Werkzeug, das heißt die Spannvorrichtung 3 ist noch nicht in Kontakt mit dem Werkzeug, wobei der Begriff Kontakt die Plananlage der Spannvorrichtung 3 am Werkzeug bezeichnet. Auch in diesem Zeitintervall ist die Kraft, die vom elektrischen Antrieb 2 aufgebracht werden muss, nicht null sondern nimmt einen endlichen Wert an. Diese Kraft entspricht den im Spannsystem 1 wirkenden Gleitreibungskräften. Wird der Antrieb 2 in dieser Phase beschleunigt, kommt noch die Beschleunigungskraft dazu.

In diesem Zeitintervall erfolgt eine Positionsregelung des elektrischen Antriebs 2 in Abhängigkeit der Messwerte der Messeinrichtung zur Bestimmung der aktuellen Motorposition. Durch diese Positionsregelung wird ein bestimmtes Geschwindigkeitsprofil des elektrischen Antriebs 2 und damit der Bewegung der Spannvorrichtung 3 erhalten.

Zum Zeitpunkt $t_0$ erfolgt der Kontakt der Spannvorrichtung 3 mit dem Werkzeug, wonach im Zeitintervall $t_0 < t < t_1$ das Werkzeug mit der Spannvorrichtung 3 gespannt wird. Die durch Messung der Motorströme bestimmte Kraft, das heißt die Spannkraft zum Spannen des Werkzeugs, nimmt dann sehr schnell bis zu einem Maximalwert zu und fällt dann am Ende des Spannvorgangs ab. Im anschließenden Zeitintervall $t \geq t_1$ wird dann das Werkzeug mit einer konstanten Haltekraft mittels der Spannvorrichtung 3 gehalten. Beim Spannen von Werkzeugen wird üblicherweise der Motor abgekoppelt und übt selbst keine Kraft mehr aus. Die Haltekraft wird dann durch die Reibungskraft aufgebracht. Beispielsweise beim Spannen feststehender Werkstücke kann der Motor unter Kraft gekoppelt bleiben und so zusammen mit der Reibungskraft die Haltekraft aufbringen.

Für die Zeiten $t > t_0$ erfolgt eine Kraftregelung des Antriebs 2, so dass mit diesem das in Figur 3 dargestellte Profil des Kraftverlaufs erhalten wird. Hierzu wird der elektrische Antrieb 2 in Abhängigkeit der mit der Messeinrichtung bestimmten Motorströme geregelt. Im Zeitpunkt $t = t_0$ erfolgt eine fliegende Umschaltung zwischen Positions- und Kraftregelung.

Die mit den Messeinrichtungen bestimmten Messwerte für die Motorströme und Motorpositionen werden nicht nur zur Regelung des elektrischen Antriebs 2, sondern auch, wie in den Figuren 4 bis 6 veranschaulicht, zur Ableitung von Kenngrößen genutzt, die Aussagen über den Spannvorgang, insbesondere auch die Qualität der Spannvorrichtung 3, erlauben. Dabei zeigen die Figuren 4 bis 6 den wegabhängigen Verlauf der bei der Spannvorrichtung 3 auftretenden Kräfte, das heißt die Spannkräfte in Abhängigkeit der aktuellen Positionen der Spannvorrichtung 3.

In Figur 4 sind mit I und II zwei wegabhängige Verläufe der Spannkräfte beim Spannen zweier Werkzeuge mit unterschiedlichen Spannschaftdurchmessern dargestellt.

Die Punkte x1 beziehungsweise x2 definieren die Kontaktpunkte der Spannvorrichtungen 3 mit dem jeweiligen Werkzeug. Durch Ermittlung dieser Berührungspunkte können die effektiven Spannschaftdurchmesser der einzelnen Werkzeuge ermittelt werden. Auch im vorliegenden Fall erfolgt ein Anfahren der Spannvorrichtung 3 an das Werkzeug eine Positionsregelung des elektrischen Antriebs 2 und beim Spannen des Werkzeugs eine Kraftregelung. Die Spannschaftdurchmesser können dann, wie in Figur 4 dargestellt, dadurch bestimmt werden, dass die Tangenten der Teilkurven für die Positions- und Kraftregelung gebildet werden, wobei deren Schnittpunkt den effektiven Spannschaftdurchmesser bestimmt. Der Spannschaftdurchmesser wird aus dem Anstieg der Spannkraft und gegebenenfalls zusätzlich aus dem Spannweg abgeleitet.

Die ermittelten Spannschaftdurchmesser werden in der Auswerteeinheit mit dort hinterlegten Sollwerten von Spannschaftdurchmessern für die einzelnen Werkzeuge verglichen. Durch diesen Vergleich kann bestimmt werden, ob die Spannschaftdurchmesser innerhalb vorgegebener Toleranzen liegen. Weiterhin ist feststellbar, ob das richtige Werkzeug gespannt wurde oder ob es verkantet in der Werkzeugaufnahme liegt.

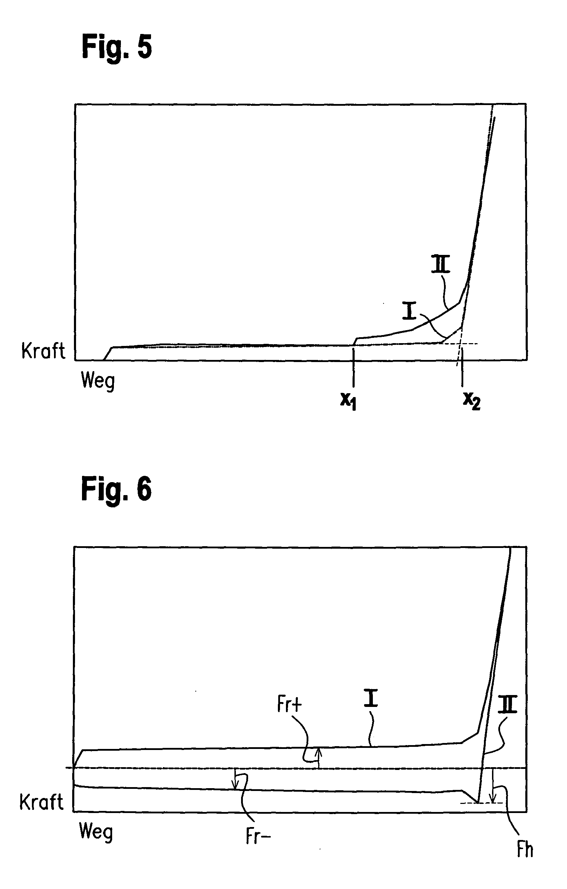

In Figur 5 ist wiederum der wegabhängige Verlauf der Spannkraft bei Spannen eines Werkzeugs dargestellt. Dabei zeigt die mit I bezeichnete Kurve den Fall, dass der Spannschaft des Werkzeugs fehlerfrei ist. Die mit II bezeichnete Kurve zeigt dagegen den Fall, dass der Spannschaft verunreinigt ist.

Durch die Verunreinigungen steigt die Spannkraft früher an als bei einem nicht verunreinigten Spannschaft, dafür ist die Steigung der Spannkraft geringer, da durch Verunreinigungen wie Späne im Allgemeinen das effektive E-Modul des Systems, bestehend aus Werkzeug und Spannvorrichtung 3, herabgesetzt wird.

Durch die Analyse des Anstiegs der Spannkraft kann somit ermittelt werden, ob der Spannschaft des Werkzeugs mit Verunreinigungen behaftet ist oder nicht.

Figur 6 zeigt den wegabhängigen Spannkraftverlauf sowohl bei Spannen des Werkzeugs mittels der Spannvorrichtung 3 (Kurve I) als auch bei Öffnen der Spannvorrichtung 3 (Kurve II).

Während des Anfahrens der Spannvorrichtung 3 an das Werkzeug und des Öffnens der Spannvorrichtung 3, das heißt während der Zeitintervalle innerhalb derer eine Positionsregelung des elektrischen Antriebs 2 durchgeführt wird, wird durch Messung der Motorströme ein Maß für die Gleitreibungskräfte $F_R$ beziehungsweise $-F_R$ im Spannsystem 1 erhalten. Diese wiederum bilden ein Maß für die im System vorhandene Schmiermittelmenge. Ebenso liefern diese Kräfte Informationen von im Spannsystem vorhandenen Beschichtungen wie Trockenschichten.

Unmittelbar bei Ablösen der Spannvorrichtung 3 vom Werkzeug wird zudem die Haftreibungskraft $F_H$ gemessen, die erforderlich ist, um die Spannvorrichtung 3 vom Werkzeug zu lösen. Diese Haftreibungskräfte $F_H$ liefern ein Maß für die Selbsthemmung des mechanischen Spannsystems.

Beim Lösen der Spannvorrichtung 3 vom Werkzeug wird vorteilhaft ausgenutzt, dass zwischen dem Motorläufer als Aktor des elektrischen Antriebs 2, der entweder vom beweglichen Teil des Linearantriebs oder der Gewindespindel 6 beim rotativen Aufrieb gebildet ist, sowie der Mechanik der Spannvorrichtung 3 ein Spiel vorhanden ist. Beim Lösen des Werkzeugs kann zunächst das Spiel mit sanfter Bewegung überwunden werden, um dann eine große Kraft zum Lösen des Werkzeugs anzuwenden. Führt dies nicht zum Lösen des Werkzeugs, das heißt ist das Werkzeug festgebacken, so wird das Spiel dazu verwendet, dass der Aktor Anlauf holt, um dann mit einem Hammereffekt schlagartig die Spannvorrichtung 3 zu lösen.

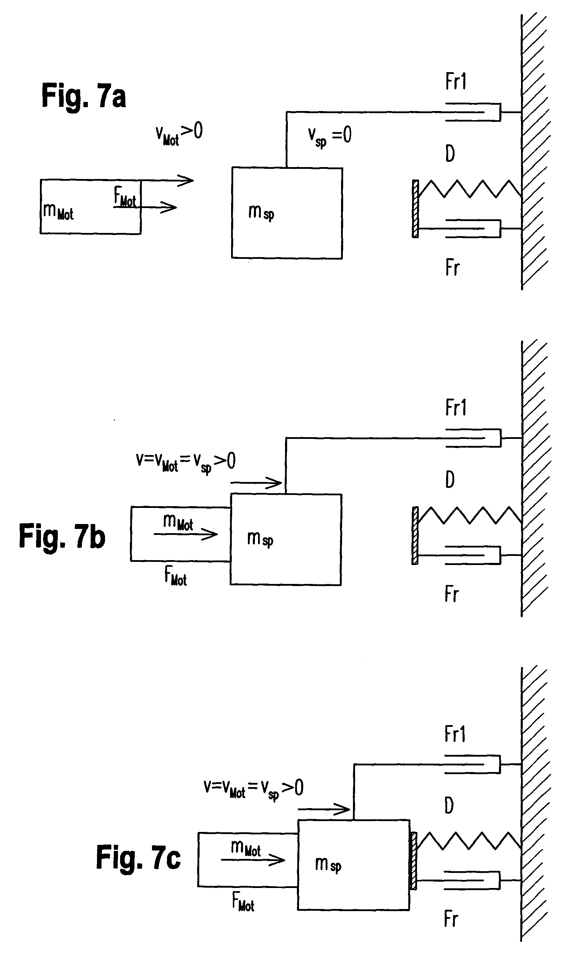

Das vorhandene Spiel zwischen Motorläufer und Spannvorrichtung 3 wird vorteilhaft auch zur Optimierung des Spannvorgangs genutzt wie nachfolgend anhand der Figuren 7 a bis c erläutert wird.

Dabei wird generell das Spiel zwischen Motorläufer und Spannvorrichtung 3 dazu genutzt, den Motorläufer gegen die Spannvorrichtung 3 zu beschleunigen, um neben der Motorkraft zusätzlich eine kinetische Energie der Masse des Motorläufers in Spannkräfte umzusetzen, um so die für den Spannvorgang benötigten Kräfte sicher bereitstellen zu können. Diese Kräfte sind insbesondere auch deshalb so groß, weil beim Spannvorgang die Selbsthemmung des Antriebs 2 überwunden werden muss.

In den Figuren 7 a bis c sind Komponenten eines Spannsystems 1 wie in den Figuren 1 und 2, in Form eines Feder-Masse-Modells, dargestellt und beschrieben. Dabei sind mit $m_{Mot}$ und $v_{Mot}$ die Masse beziehungsweise Geschwindigkeit des Motorläufers, das heißt der bewegten Massen des Antriebs des Spannsatzes, und mit $m_{sp}$ und $v_{sp}$ die Masse beziehungsweise Geschwindigkeit eines die Spannvorrichtung 3 bildenden Spannsatzes des Spannsystems 1 beschrieben.

Weiterhin ist in den Figuren 7 a bis c das Werkzeug modellmäßig durch eine Federkonstante D und eine Reibungskraft $F_R$ beschrieben. Schließlich ist mit $F_{R1}$ eine weitere, gegen die Bewegung der Masse $m_{sp}$ wirkende Reibungskraft beschrieben.

Figur 7a zeigt die erste Phase des Spannvorgangs, in welcher aufgrund des vorhandenen Spiels zwischen Motorläufer und Spannsatz der Motorläufer auf den Spannsatz zu beschleunigt werden kann. Dementsprechend wirkt auf die Masse $m_{Mot}$ die vom Antrieb 2 ausgeübte Motorkraft $F_{Mot}$, wodurch diese beschleunigt wird. Die Masse $m_{sp}$ des Spannsatzes ist dagegen noch im Ruhezustand ($v_{sp} = 0$).

Je größer der Spielbereich ist, umso mehr Schwung kann der Motorläufer in dieser Phase aufnehmen und umso größer ist die Geschwindigkeit des Motorläufers $v_{Mot}$ kurz vor Auftreffen auf die Masse $m_{sp}$.

Figur 7b zeigt die zweite Phase des Spannvorgangs nach Auftreffen des Motorläufers auf den Spannsatz. Nach dem Zusammenstoß der Massen $m_{sp}$ und $m_{Mot}$ bewegen sich diese gemeinsam mit einer Geschwindigkeit v weiter, das heißt es liegt in guter Näherung ein unelastischer Stoß vor.

Die Geschwindigkeit v des Gesamtsystems von Motorläufer und Spannzug unmittelbar nach deren Zusammentreffen beträgt

$$v = m_{Mot} \cdot v_{Mot} / (m_{Mot} + m_{sp})$$

Danach werden beide Massen, das heißt, m = $m_{Mot}$ + $m_{sp}$, durch die Motorkraft über eine gewisse Strecke unter Einfluss einer ersten Reibungskraft $F_{R1}$ weiter beschleunigt und nehmen dabei noch mehr kinetische Energie auf.

Figur 7c zeigt die dritte Phase des Spannvorgangs zu Beginn des eigentlichen Spannens des Werkzeugs mit dem Spannsatz.

Zu Beginn dieses Spannvorgangs haben Motor und Spannsatz die Geschwindigkeit vs und treffen auf das Werkzeug, welches durch eine effektive Federkonstante D und eine Reibungskraft $F_R$ nach dem Hookeschen Gesetz beschrieben werden kann. Die Reibungskraft $F_R$ ist in erster Näherung unabhängig von der Geschwindigkeit, jedoch proportional zur Spannkraft (also auch zum Spannweg) selbst. Die zusätzlich Masse des Werkzeugs selbst, die beim Spannen bewegt wird, ist durch die hohe Übersetzung vernachlässigbar. Beim Spannen wirkt die Motorkraft weiter, jedoch nehmen die Gegenkräfte, nämlich Federkraft und Reibung $F_R$ stark zu und verringern die Beschleunigung bis auf 0. In diesem Moment würde der Antrieb wieder beginnen, zurück zu laufen. Dies wird jedoch durch die Reibung zwischen Spannvorrichtung 3 und Werkzeug verhindert. Die Reibungskraft $F_R$ ändert dann ihr Vorzeichen und zeigt ebenfalls in die positive Richtung. Dabei kompensiert sie alle anderen angreifenden Kräfte, solange diese nicht größer werden, als die maximale Haftreibungskraft. Der Spannweg (Bremsweg) wird umso größer, je höher die Geschwindigkeit der auftreffenden Massen kurz vor dem Spannen des Werkzeugs und je größer die wirkende Motorkraft während des Spannens ist. Entsprechend größer wird auch die resultierende Spannkraft.

Wie die Modellbetrachtung gemäß Figuren 7a bis c zeigt, wird durch die Ausnutzung des Spiels zwischen Motorläufer und Spannsatz infolge der zusätzlich zur Motorkraft genutzten kinetischen Energie die Spannkraft signifikant erhöht.

Gemäß des in den Figuren 7 a bis c beschriebenen Modells kann der Spannweg, das heißt der Bremsweg der Massen $m_{Mot}$ und $m_{sp}$, als direktes Maß für die Spannkraft ausgewertet werden.

Bei Auftreffen des Motorläufers auf den Spannsatz entsteht eine hohe Spitzenkraft, die zu einem Verschleiß oder sogar einer Zerstörung von Lagerteilen und dergleichen führen kann. Zur Vermeidung derartiger Kraftspitzen kann am Motorläufer oder am Spannsatz ein Dämpfungselement oder Federelement wie eine Tellerfeder vorgesehen sein.

Bezugszeichenliste

(1)  Spannsystem
(2)  Antrieb
(3)  Spannvorrichtung
(4)  Spule
(5)  Magnet
(6)  Gewindespindel

**Patentansprüche**

1.  Verfahren zur Betätigung einer Spannvorrichtung (3) zum Spannen eines Werkzeugs oder Werkstücks mittels eines elektrischen Antriebs (2), in welchem Einrichtungen zur Messung von Motorströmen und Motorpositionen zur Kontrolle von mit der Spannvorrichtung (3) durchgeführten Spannvorgängen integriert sind.

2.  Verfahren nach Anspruch 1, **dadurch gekennzeichnet, dass** die Messungen jeweils während eines Spannvorgangs oder während eines Messvorgangs, bei welchem die Spannvorrichtung gegenüber dem Spannvorgang mit geringerer Geschwindigkeit bewegt wird, durchgeführt werden.

3.  Verfahren nach einem der Ansprüche 1 oder 2, **dadurch gekennzeichnet, dass** aus dem gemessenen Motorstrom unter Anwendung eines Modells, in welches relevante physikalische Einflussparameter eingehen, die Spannkraft, mit welcher die Spannvorrichtung (3) das Werkzeug spannt und/oder die Lösekraft, die Kraft zum Lösen des gespannten Werkzeugs, benötigt wird, bestimmt wird.

4.  Verfahren nach einem der Ansprüche 1 bis 3, **dadurch gekennzeichnet, dass** der zeit- oder wegabhängige Verlauf der Spannkräfte bestimmt wird.

5.  Verfahren nach Anspruch 4, **dadurch gekennzeichnet, dass** der Spannweg der Spannvorrichtung als Maß für die jeweilige Spannkraft ausgewertet wird.

6.  Verfahren nach einem der Ansprüche 1 bis 5, **dadurch gekennzeichnet, dass** der elektrische Antrieb (2) mit einer Regelung betrieben wird.

7.  Verfahren nach Anspruch 6, **dadurch gekennzeichnet, dass** bei Anfahren der Spannvorrichtung (3) an das Werkzeug eine Positionsregelung durchgeführt wird, und dass bei einem bestimmten Punkt des Spannvorgangs eine Umschaltung auf eine Kraftregelung oder Momentenregelung erfolgt.

8.  Verfahren nach Anspruch 7, **dadurch gekennzeichnet, dass** eine fliegende Umschaltung zwischen Positions- und Kraftregelung oder Momentenregelung durchgeführt wird.

**9.** Verfahren nach einem der Ansprüche 1 bis 8, **dadurch gekennzeichnet, dass** durch Messung des Anstiegs der Spannkraft der effektive Spannschaftdurchmesser des Werkzeugs bestimmt wird.

**10.** Verfahren nach Anspruch 9, **dadurch gekennzeichnet, dass** der gemessene Spannschaftdurchmesser mit einem Sollwert verglichen wird.

**11.** Verfahren nach einem der Ansprüche 9 oder 10, **dadurch gekennzeichnet, dass** durch Messung des örtlichen Verlaufs des Anstiegs der Spannkraft ermittelt wird, ob der Spannschaft Defekte oder Verunreinigungen aufweist.

**12.** Verfahren nach einem der Ansprüche 1 bis 11, **dadurch gekennzeichnet, dass** durch Messung von Motorströmen Gleitreibungskräfte als Kenngröße für die im elektrischen Antrieb (2) und der Spannvorrichtung (3) vorhandenen Schmiermittel oder Beschichtungen ermittelt werden.

**13.** Verfahren nach einem der Ansprüche 1 bis 12, **dadurch gekennzeichnet, dass** durch Messung von Motorströmen Haftreibungskräfte als Kenngrößen für die Selbsthemmung der Mechanik der Spannvorrichtung (3) ermittelt werden.

**14.** Verfahren nach einem der Ansprüche 1 bis 13, **dadurch gekennzeichnet, dass** ein Spiel zwischen einem von bewegten Massen des Antriebs (2) gebildeten Motorläufer und der Spannvorrichtung (3) dazu genutzt wird, durch Beschleunigen des Motorläufers auf die Spannvorrichtung (3) die Spannkraft zu erhöhen.

**15.** Spannsystem (1) zur Betätigung einer Spannvorrichtung (3) zum Spannen eines Werkzeugs oder Werkstücks mittels eines elektrischen Antriebs (2), in welchem Einrichtungen zur Messung von Motorströmen und Motorpositionen integriert sind, mittels derer mit der Spannvorrichtung (3) durchgeführte Spannvorgänge kontrollierbar sind.

**16.** Spannsystem nach Anspruch 15, **dadurch gekennzeichnet, dass** der elektrische Antrieb (2) ein Linearantrieb ist.

**17.** Spannsystem nach Anspruch 16, **dadurch gekennzeichnet, dass** der elektrische Antrieb (2) ein rotativer Antrieb (2) mit einer Übersetzung ist.

**18.** Spannsystem nach Anspruch 17, **dadurch gekennzeichnet, dass** dem elektrischen Antrieb (2) eine Gewindespindel als Übersetzung zugeordnet ist.

**19.** Spannsystem nach einem der Ansprüche 15 bis 18, **dadurch gekennzeichnet, dass** mit dem elektrischen Antrieb (2) allein die Spannkräfte zum Spannen des Werkzeugs mit der Spannvorrichtung (3) generiert werden.

**20.** Spannsystem nach einem der Ansprüche 15 bis 18, **dadurch gekennzeichnet, dass** Hilfsfederpakete vorgesehen sind, mittels derer zusätzlich zu den mittels des elektrischen Antriebs (2) generierten Spannkräften eine Vorspannung generiert wird.

**21.** Spannsystem nach einem der Ansprüche 15 bis 20, **dadurch gekennzeichnet, dass** an dem Motorläufer des Antriebs (2) oder der Spannvorrichtung (3) ein Dämpfungs- oder Federelement angeordnet ist.

# Fig. 1

**2**

**5**

**1**

**3**

**4**

# Fig. 2

**2**

**6**

**1**

**3**

# Fig. 3

Kraft

t₀    t₁    Zeit

# Fig. 4

Kraft

II

I

x₁  x₂   Weg

# Fig. 5

# Fig. 6

## Fig. 7a

$v_{Mot} > 0$    $v_{sp} = 0$

Fr1

D

Fr

$m_{Mot}$    $F_{Mot}$

$m_{sp}$

## Fig. 7b

$v = v_{Mot} = v_{sp} > 0$

Fr1

D

Fr

$m_{Mot}$

$m_{sp}$

$F_{Mot}$

## Fig. 7c

$v = v_{Mot} = v_{sp} > 0$

Fr1

D

Fr

$m_{Mot}$

$m_{sp}$

$F_{Mot}$

| | Europäisches Patentamt European Patent Office Office européen des brevets | **EUROPÄISCHER RECHERCHENBERICHT** | **Nummer der Anmeldung** EP 07 01 9880 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X Y | US 2003/014860 A1 (ISOGAI TAKEYOSHI [JP] ET AL) 23. Januar 2003 (2003-01-23) * Absätze [0088] - [0090] * ----- | 1-3,6-8, 15-19,21 4,5 | INV. B23Q17/00 |
| Y | DE 43 22 317 C1 (GILDEMEISTER AG [DE]) 27. Oktober 1994 (1994-10-27) * Ansprüche 1,3; Abbildungen 2-4 * ----- | 4,5 | |
| X | WO 2006/030520 A (MITSUBISHI ELECTRIC CORP [JP]; HITACHI LTD [JP]; TAKESHITA TORAO [JP];) 23. März 2006 (2006-03-23) * Zusammenfassung * ----- | 1-3 | |

|  |
|---|
| RECHERCHIERTE SACHGEBIETE (IPC) B23Q |

~~Der vorliegende Recherchenbericht wurde für alle Patentans~~prüche erstellt

| Recherchenort | Abschlußdatum der Recherche | Prüfer |
|---|---|---|
| München | 7. August 2008 | Lasa Goñi, Andoni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
Siehe Ergänzungsblatt B
```

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

```
1-8, 15-19, 21
```

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 07 01 9880

Nach Auffassung der Recherchenabteilung entspricht die vorliegendeeuropäische Patentanmeldung nicht den Anforderungen an die Einheitlichkeit der Erfindungund enthält mehrere Erfindungen oder Gruppen von Erfindungen, nämlich:

1. Ansprüche: 1-8,15-19,21

   Verfahren bzw. Spannsystem zur Betätigung einer Spannvorrichtung gemäss Anspruch 1 bzw. 15, dadurch gekennzeichnet, dass der Spannweg der Spannvorrichtung als Mass für die Spannkraft ausgewertet wird (Anspruch 5). Gelöste Aufgabe: Alternative Bestimmungsmethode der Spannkraft.
   ---

2. Ansprüche: 9-11

   Verfahren zur Betätigung einer Spannvorrichtung gemäss Anspruch 1, dadurch gekennzeichnet, dass durch Messung des Anstiegs der Spannkraft der Spannschaftdurchmesser des Werkzeugs bestimmt wird (Anspruch 9). Gel¦ste Aufgabe: Alternative Bestimmungsmethode des Spannschaftdurchmessers des Werkzeugs.
   ---

3. Ansprüche: 12-13

   Verfahren zur Betätigung einer Spannvorrichtung gemäss Anspruch 1, gekennzeichnet durch die Ermittlung von Reibungskräften (Anspruch 12). Gelöste Aufgabe: Ermittlung von Informationen über vorhandenen Schmiermittel oder Selbsthemmung der Mechanik der Spannvorrichtung.
   ---

4. Ansprüche: 14,20

   Verfahren zur Betätigung einer Spannvorrichtung gemäss Anspruch 1, gekennzeichnet durch Mittel zur Erhöhung der Spannkraft. Gelöste Aufgabe: Alternative Mittel zur Erhöhung der Spannkraft.
   ---

**ANHANG ZUM EUROPÄISCHEN RECHERCHENBERICHT
ÜBER DIE EUROPÄISCHE PATENTANMELDUNG NR.**

EP 07 01 9880

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2008

| Im Recherchenbericht angeführtes Patentdokument | | Datum der Veröffentlichung | Mitglied(er) der Patentfamilie | | Datum der Veröffentlichung |
|---|---|---|---|---|---|
| US 2003014860 | A1 | 23-01-2003 | JP | 2003025266 A | 29-01-2003 |
| DE 4322317 | C1 | 27-10-1994 | AT | 150350 T | 15-04-1997 |
| | | | EP | 0633096 A1 | 11-01-1995 |
| WO 2006030520 | A | 23-03-2006 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10101096 A1